# FASCICULE DE BREVET EUROPEEN

(11) **EP 2 769 154 B1**
(45) Date de publication et mention de la délivrance du brevet: **18.07.2018**
(21) Numéro de dépôt: 12775805.0
(22) Date de dépôt: 01.10.2012
(51) Int. Cl.: F25B 17/08

(54) **PROCEDE THERMIQUE METTANT EN OEUVRE UNE PLURALITE DE REACTEURS DE SORPTION**
THERMISCHES VERFAHREN MIT MEHREREN SORPTIONSREAKTOREN
THERMAL METHOD USING A PLURALITY OF SORPTION REACTORS

(30) Priorité: 13.10.2011 FR 1159268
(43) Date de publication de la demande: 27.08.2014
(73) Titulaire: GAZTRANSPORT ET TECHNIGAZ, 78470 Saint-Rémy-lès-Chevreuse (FR)
(72) Inventeur: LOMBARD, Fabrice, F-78190 Trappes (FR); FOURCADE, Hélène, F-97430 Le Tampon (FR)
(74) Mandataire: Loyer & Abello
(86) Numéro de dépôt international: PCT/FR2012/052223
(87) Numéro de publication internationale: WO 2013/054020

(56) Documents cités:
- EP-A1- 0 702 199
- DE-A1- 10 062 174
- US-A- 4 111 002

## Description

L'invention se rapporte au domaine des procédés thermiques et des systèmes thermiques à sorption, en particulier aux procédés et systèmes mettant en oeuvre plusieurs réacteurs de sorption selon des cycles de fonctionnement décalés dans le temps.

Les applications des cycles d'adsorption-désorption sont multiples, en particulier production de froid frigorifique ou cryogénique, climatisation domestique, déshydratation de produits, traitement de l'air ou de gaz industriels, réalisation de pompes à chaleur, compresseurs, pompes à vide, et autres.

Les procédés thermiques utilisant des cycles d'adsorption-désorption présentent généralement l'avantage de fonctionner avec de l'énergie fournie sous la forme de chaleur, sans nécessiter aucune forme d'énergie mécanique. Une telle propriété influence favorablement le coût énergétique de ces procédés. Toutefois, en raison des pertes de chaleur induites par les cycles thermiques du ou des adsorbeurs, le rendement énergétique ou coefficient de performance (COP) d'un tel procédé est généralement médiocre.

Ce fait peut être illustré par un exemple dans le cas des procédés frigorifiques. Un procédé frigorifique traditionnel à compression de la vapeur fournissant du froid à 0°C atteint un COP de l'ordre de 3 à 4. Toutefois, la production d'énergie mécanique ou électrique présente un rendement dont il faut tenir compte afin de faire un bilan global. En considérant un rendement de production de l'ordre de 30% à partir d'une énergie noble, comme du gaz, fuel ou nucléaire, le COP final du procédé frigorifique traditionnel peut être estimé entre environ 0,9 et 1,2.

Pour le même objectif de température, un procédé frigorifique par adsorption d'eau sur zéolithe, par exemple, présente un COP typique de l'ordre de 0,5 à 0,6. Ces performances rendent ces dispositifs à adsorption peu compétitifs a priori. En revanche, malgré des performances plus faibles, ils permettent de s'affranchir d'un apport en énergie noble, car ils peuvent exploiter des chaleurs perdues ou disponibles à faible coût. La compétitivité d'un procédé frigorifique par adsorption dépend donc principalement du contexte d'utilisation.

Un moyen d'augmenter la performance énergétique est présenté dans le document « Numerical study of a combined heat and mass recovery adsorption cooling cycle » de K.C. Leong et Y. Liu, International Journal of Heat and Mass transfer 47 (2004), 4761-4770. Celui-ci présente une étude numérique sur un système thermique utilisant simultanément l'échange de vapeur avec l'échange de chaleur entre deux réacteurs. L'utilisation de l'échange de vapeur et de l'échange de chaleurs entre réacteurs permet d'obtenir un COP simulé de 0,65.

Le document EP0702199 divulgue un procédé et un système thermique à sorption selon les préambules des revendications 1 et 9. Le système thermique comporte un évaporateur, un condenseur et une pluralité de groupes de sorption. Les réacteurs de sorption de chaque groupe sont connectés thermiquement de manière étagée. En d'autres termes, le fluide de travail destiné à être absorbé dans un réacteur n+1 reçoit un flux de chaleur du corps sorbant d'un réacteur n lors de l'absorption d'un fluide de travail dans le réacteur n. De même, le fluide de travail qui est désorbé dans le réacteur n+1 est destiné à transmettre un flux de chaleur au corps sorbant du réacteur n lors de la désorption du fluide de travail dans le réacteur n.

Selon un mode de réalisation, l'invention fournit un procédé thermique de sorption mettant en oeuvre un évaporateur, un condenseur et une pluralité de groupes de sorption,
un groupe de sorption comprenant à chaque fois au moins deux réacteurs de sorption aptes à effectuer chacun un cycle de fonctionnement avec l'évaporateur et le condenseur associé à ce groupe de sorption, un réacteur comportant un corps sorbant apte à effectuer une sorption d'un fluide de travail en phase vapeur,
dans lequel le cycle de fonctionnement effectué par chacun des réacteurs de sorption comporte :
une étape de dépressurisation et de sorption pour accroître un taux de remplissage du corps sorbant par le fluide de travail, l'étape de dépressurisation et de sorption comportant un phase de dépressurisation et une phase de sorption, et
une étape de pressurisation et de désorption pour réduire un taux de remplissage du corps sorbant par le fluide de travail, l'étape de pressurisation et de désorption comportant une phase de pressurisation et une phase de désorption, plusieurs desdits réacteurs de sorption au sein de chaque groupe de sorption effectuant le cycle de fonctionnement de manière décalée dans le temps,
chaque réacteur de sorption au sein de chaque groupe effectuant pendant l'étape de pressurisation et de désorption un premier échange de chaleur avec un autre réacteur de sorption dudit groupe pour recevoir un flux de chaleur depuis ledit autre réacteur de sorption dudit groupe et pendant l'étape de dépressurisation et de sorption un deuxième échange de chaleur pour transférer un flux de chaleur vers ledit autre réacteur de sorption, un réacteur de sorption du premier groupe effectuant au cours du cycle de fonctionnement un échange de vapeur avec un réacteur de sorption du deuxième groupe pour recevoir de la vapeur dudit réacteur de sorption du deuxième groupe lors d'une phase de pressurisation du premier réacteur de sorption du groupe et/ou pour céder de la vapeur audit réacteur de sorption du deuxième groupe lors d'une phase de dépressurisation du réacteur de sorption du premier groupe,
ledit réacteur de sorption du premier groupe étant dans la phase de pressurisation lorsque le réacteur d'adsorption du deuxième groupe est dans la phase de dépressurisation et ledit réacteur de sorption du deuxième groupe étant dans la phase de pressurisation lorsque le réacteur de sorption du premier groupe est dans la phase de dépressurisation.

Selon un mode de réalisation, l'échange vapeur est effectué au début desdites phase de pressurisation et de dépressurisation du réacteur de sorption du premier groupe de sorption et du réacteur de sorption du deuxième groupe de sorption. Selon un mode de réalisation, l'échange de chaleur effectué par un réacteur de sorption est subséquent à l'échange de vapeurs effectué par ledit réacteur de sorption au sein d'un cycle de fonctionnement.

Selon un mode de réalisation, le premier groupe de sorption comporte un nombre impair de réacteurs de sorption. Selon un mode de réalisation, le premier groupe de sorption et le deuxième groupe de sorption ont un même nombre de réacteurs de sorption.

Selon un mode de réalisation, les réacteurs de sorption des groupes de sorption ont des cycles de fonctionnement sensiblement identiques et chaque réacteur du premier groupe effectue au cours du cycle de fonctionnement un échange de vapeur avec un réacteur respectif du deuxième groupe, le réacteur respectif étant déphasé d'un demi cycle par rapport audit réacteur du premier groupe.

Avantageusement, l'échange de vapeur est effectué de manière adiabatique de telle sorte qu'aucun des réacteurs échangeant de la vapeur ne reçoit ou ne fournit simultanément de la chaleur à l'extérieur des deux réacteurs.

Selon un mode de réalisation, le premier groupe de sorption et le deuxième groupe de sorption comportent un nombre de réacteurs de sorption supérieur ou égal à trois, un premier des réacteurs dans chaque groupe effectuant au moins quatre échanges de chaleur au cours du cycle de fonctionnement pour recevoir des flux de chaleur depuis au moins deux autres des réacteurs du même groupe pendant l'étape de pressurisation et désorption du premier réacteur et transférer des flux de chaleur vers au moins deux autres des réacteurs du même groupe pendant l'étape de dépressurisation et de sorption du premier réacteur,
un premier échange de chaleur étant effectué entre le premier réacteur dans une phase antérieure de l'étape de dépressurisation et de sorption et un deuxième des réacteurs dans une phase postérieure de l'étape de pressurisation et de désorption,
un deuxième échange de chaleur étant effectué entre le premier réacteur dans une phase postérieure de l'étape de dépressurisation et de sorption et un troisième des réacteurs dans une phase antérieure de l'étape de pressurisation et de désorption,
un troisième échange de chaleur étant effectué entre le premier réacteur dans une phase antérieure de l'étape de pressurisation et de désorption et le deuxième réacteur dans une phase postérieure de l'étape de dépressurisation et de sorption, et
un quatrième échange de chaleur étant effectué entre le premier réacteur dans une phase postérieure de l'étape de pressurisation et de désorption et le troisième réacteur dans une phase antérieure de l'étape de dépressurisation et de sorption.

Les termes antérieur, postérieur sont utilisés ici dans un sens relatif les uns par rapport aux autres.

Selon un mode de réalisation, l'invention fournit également un système thermique à sorption comportant au moins deux groupes de sorption, un groupe de sorption comportant à chaque fois :
un premier réacteur et un deuxième réacteur de sorption aptes à fonctionner au sein du groupe selon un cycle de fonctionnement et de manière mutuellement décalée dans le temps, chaque réacteur comportant :
   un enceinte contenant un corps sorbant apte à effectuer une sorption d'un fluide de travail en phase vapeur,
   au moins une conduite de fluide en communication avec l'enceinte pour apporter le fluide de travail au réacteur dans une étape de dépressurisation et de sorption du cycle de fonctionnement et pour évacuer le fluide de travail du réacteur dans une étape de pressurisation et désorption du cycle de fonctionnement, et
   un échangeur de chaleur apte à mettre un fluide caloporteur en contact thermique avec le corps sorbant dans l'enceinte, et
un dispositif de circulation de fluide caloporteur relié aux échangeurs de chaleur des réacteurs d'adsorption du groupe et apte à produire sélectivement des communications de fluide caloporteur entre les échangeurs de chaleur pour transférer des flux de chaleur entre les réacteurs de sorption, de sorte que le premier réacteur de sorption au sein du groupe effectue au cours du cycle de fonctionnement un échange de chaleur avec le deuxième réacteur de sorption du groupe pour recevoir des flux de chaleur depuis le deuxième réacteur de sorption du groupe pendant l'étape de pressurisation et désorption et transférer des flux de chaleur vers le deuxième réacteur de sorption pendant l'étape de dépressurisation et d'adsorption,
ledit premier réacteur de sorption d'un premier groupe étant dans la phase de pressurisation lorsque le premier réacteur de sorption d'un deuxième groupe est dans la phase de dépressurisation et ledit premier réacteur de sorption du deuxième groupe étant dans la phase de pressurisation lorsque le premier réacteur de sorption du premier groupe est dans la phase de dépressurisation,
et des moyens de liaison obturables agencés entre l'enceinte du premier réacteur de sorption du premier groupe de sorption et l'enceinte du premier réacteur de sorption du deuxième groupe de sorption, et aptes à réaliser un échange de vapeur entre le premier réacteur de sorption du premier groupe et le premier réacteur de sorption du deuxième groupe au cours du cycle de fonctionnement, lesdits moyens de liaison obturables étant ouverts lors de la phase de pressurisation du premier réacteur de sorption du premier groupe pour recevoir de la vapeur du premier réacteur de sorption dudit deuxième groupe, et/ou lors de la phase de dépressurisation du premier réacteur de sorption du premier groupe pour céder de la vapeur audit premier réacteur de sorption du deuxième groupe.

Selon un mode de réalisation, chaque groupe de sorption comporte au moins trois réacteurs de sorption et le dispositif de circulation de fluide caloporteur est apte à produire sélectivement des communications de fluide caloporteur entre les échangeurs de chaleur de sorte que le premier des réacteurs de sorption du groupe effectue au moins quatre échanges de chaleur au cours du cycle de fonctionnement pour recevoir des flux de chaleur depuis au moins deux autres des réacteurs du groupe pendant l'étape de pressurisation et désorption et transférer des flux de chaleur vers au moins deux autres des réacteurs du groupe pendant l'étape de dépressurisation et d'adsorption,
un premier échange de chaleur étant effectué entre le premier réacteur dans une phase antérieure de l'étape de dépressurisation et d'adsorption et un deuxième des réacteurs dans une phase postérieure de l'étape de pressurisation et désorption,
un deuxième échange de chaleur étant effectué entre le premier réacteur dans une phase postérieure de l'étape de dépressurisation et d'adsorption et un troisième des réacteurs dans une phase antérieure de l'étape de pressurisation et désorption,
un troisième échange de chaleur étant effectué entre le premier réacteur dans une phase antérieure de l'étape de pressurisation et désorption et le deuxième réacteur dans une phase postérieure de l'étape de dépressurisation et d'adsorption, et
un quatrième échange de chaleur étant effectué entre le premier réacteur dans une phase postérieure de l'étape de pressurisation et désorption et le troisième réacteur dans une phase antérieure de l'étape de dépressurisation et d'adsorption.

Selon un mode de réalisation, chaque groupe de sorption comporte trois réacteurs de sorption et les moyens de liaison obturables relient chaque réacteur de sorption du premier groupe à un réacteur respectif du deuxième groupe de sorte que chaque réacteur de sorption du premier groupe de sorption effectue au cours de son cycle de fonctionnement un échange de vapeur avec ledit réacteur respectif du deuxième groupe.

Le corps sorbant peut être de différentes natures, solide ou liquide. Des corps solides adsorbants sont notamment les zéolithes de type A, X et Y, les charbons actifs, l'alumine active, le gel de silice et leurs mélanges. Selon un mode de réalisation préféré, le corps adsorbant comporte de la zéolite.

Dans d'autres modes de réalisation, le phénomène d'absorption d'un fluide de travail par un liquide absorbant est exploité pour réaliser ces systèmes et procédés thermiques. Des exemples de corps liquides absorbants sont le bromure de lithium, chlorure de lithium et l'eau. Des fluides de travail adaptés à ces corps absorbants peuvent être trouvés, notamment l'ammoniac NH₃.

Le fluide de travail peut être de différentes natures. Des exemples de fluides de travail pouvant être utilisés avec les corps adsorbants précités sont notamment l'eau, l'ammoniac, les alcanes, les alcènes, les alcools et leurs mélanges. Le choix d'un fluide de travail peut être effectué en fonction de l'application, notamment des températures à atteindre. Le choix d'un corps adsorbant et d'un fluide de travail. Selon un mode de réalisation particulier est effectué en fonction de leur affinité physico-chimique, le fluide de travail comporte de l'eau.

Une idée à la base de l'invention est de diminuer la quantité d'énergie devant être fournie depuis l'extérieur pour faire fonctionner une machine thermique à adsorption. Cette diminution de la quantité d'énergie devant être fournie depuis l'extérieur est obtenue en faisant bénéficier des gains de performances réalisés à la fois en effectuant des échanges de chaleur et en effectuant des échanges de vapeur entre des réacteurs d'une machine comportant plusieurs groupes de sorption.

Certains aspects de l'invention partent de l'idée de décomposer un cycle de fonctionnement d'un réacteur à sorption en une pluralité de phases successives correspondant à des variations de température et pression et de faire fonctionner plusieurs réacteurs de manière décalée dans le temps, pour qu'ils se trouvent simultanément à différentes phases et donc à différentes températures et pressions.

Certains aspects de l'invention partent du constat qu'effectuer des échange de chaleurs entre les réacteurs d'un même groupe et effectuer les échanges de vapeur entre réacteurs de plusieurs groupes permet de réaliser ces deux types d'échanges avec une mise en oeuvre simplifiée et peu couteuse.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.

Sur ces dessins :
- La figure 1 est une représentation schématique d'une machine thermique comportant un réacteur d'adsorption.
- La figure 2 est un diagramme température-pression représentant un cycle adsorption-désorption pouvant être mis en oeuvre avec la machine de la figure 1.
- La figure 3 est un diagramme température-chaleur représentant un échange de chaleur pouvant être mis en oeuvre par au moins deux réacteurs d'adsorption effectuant des cycles adsorption-désorption de manière décalée dans le temps.
- La figure 4 est un diagramme température-chaleur représentant des échanges de chaleur pouvant être mis en oeuvre par au moins quatre réacteurs d'adsorption effectuant des cycles adsorption-désorption de manière décalée dans le temps.
- La figure 5 est un diagramme température-pression représentant un cycle adsorption-désorption durant lequel est effectué un échange de vapeur.
- La figure 6 est une représentation schématique d'une machine thermique à deux groupes d'adsorption comprenant chacun trois réacteurs d'adsorption.
- Les figures 7A à 7F sont des diagrammes analogues à la figure 2 représentant des cycles adsorption-désorption mis en oeuvre par les trois réacteurs d'adsorption d'un groupe de la machine de la figure 6 de manière décalée dans le temps.
- La figure 8 représente les cycles des réacteurs de la machine thermique de la figure 6 et les échanges de vapeur mis en oeuvre.

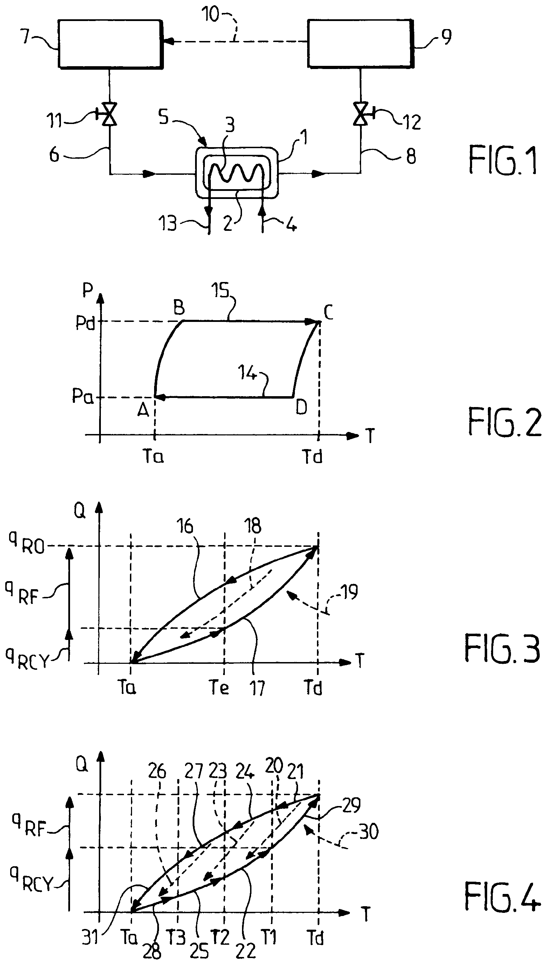

En référence aux figures 1 et 2, on rappelle quelques principes de fonctionnement d'une machine thermique à adsorption. Un réacteur d'adsorption 5 comporte une enceinte étanche au fluide 1 contenant un matériau adsorbant 2 et un échangeur de chaleur 3 capable de fournir ou de retirer de la chaleur depuis ou vers l'extérieur de l'enceinte 1. L'enceinte 1 peut échanger un fluide de travail en phase vapeur avec l'extérieur par l'intermédiaire d'au moins une canalisation.

L'échangeur de chaleur 3 du réacteur 5 permet de chauffer ou refroidir le corps adsorbant 2 de manière homogène. Comme cela est visible sur la figure 1, l'échangeur 3 dispose pour cela de deux connexions hydrauliques pour le fluide caloporteur, à savoir une entrée 4 et une sortie 13.

Le réacteur d'adsorption 5 met en oeuvre un cycle d'adsorption-désorption consistant en un cycle d'échange de chaleur et de matière, à savoir le fluide de travail. Dans une étape de dépressurisation et d'adsorption, dans laquelle le matériau adsorbant 2 est refroidi, le réacteur d'adsorption 5 produit une basse pression capable de pomper le fluide de travail en phase vapeur depuis l'extérieur, par exemple depuis une enceinte d'évaporation 7. Dans une étape de pressurisation et désorption, dans laquelle le matériau adsorbant 2 est chauffé, le réacteur d'adsorption 5 produit une plus haute pression capable de rejeter le fluide de travail en phase vapeur vers l'extérieur, par exemple vers une enceinte de condensation 9. Dans l'exemple représenté à la figure 1, le réacteur d'adsorption 5 est relié à l'enceinte d'évaporation 7 par une canalisation d'aspiration 6 munie d'une vanne de contrôle 11 et à enceinte de condensation 9 par une canalisation de refoulement 8 munie d'une vanne de contrôle 12. Pour utiliser le fluide de travail en circuit fermé, une canalisation de recirculation 10 peut être prévue entre l'enceinte de condensation 9 et l'enceinte d'évaporation 7.

Un exemple de réalisation du cycle d'adsorption-désorption est représenté sur la figure 2. L'étape de dépressurisation et d'adsorption 14 est une phase dans laquelle le matériau adsorbant 2 est refroidi à l'aide de l'échangeur de chaleur 3, la vanne 11 étant le cas échéant ouverte et la vanne 12 fermée. Dans cette étape, le matériau adsorbant se charge avec le fluide de travail. La température du matériau adsorbant 2 diminue de Td à Ta et la pression partielle de fluide de travail diminue de Pd à Pa. L'étape de dépressurisation et d'adsorption 14 consiste en une phase de dépressurisation de C vers D suivi d'une phase d'adsorption de D vers A

L'étape de pressurisation et désorption 15 est une phase dans laquelle le matériau adsorbant 2 est chauffé à l'aide de l'échangeur de chaleur 3, la vanne 12 étant le cas échéant ouverte et la vanne 11 fermée. Dans cette étape, le matériau adsorbant décharge le fluide de travail. La température du matériau adsorbant 2 progresse de Tₐ à T_{d}>Tₐ et la pression partielle de fluide de travail progresse de Pₐ à P_{d}>Pₐ. Puis le cycle peut être répété à l'identique. L'étape de pressurisation et de désorption 15 consiste en une phase de pressurisation de A vers B suivi d'une phase désorption de B vers C.

Un des principaux et plus importants intérêts que présentent les cycles à adsorption est de fonctionner en utilisant de la chaleur pour l'étape de pressurisation et désorption 15. Dans le cas d'un procédé frigorifique, la désorption est effectuée à une pression P_{d} supérieure à la pression Pa présente lors de l'étape dépressurisation et d'adsorption 14, afin que la vapeur soit évacuée vers le condenseur 9 dont la pression est supérieure à celle de l'évaporateur 7. Par conséquent, une régénération évacuant la vapeur vers le condenseur 9 nécessite une élévation de température jusqu'à une température T_{d}, qui est généralement d'au moins une centaine de degrés par rapport à la température d'adsorption Tₐ. La régénération correspond à la phase de compression de la vapeur pour l'envoyer vers le condenseur 9, c'est donc la phase qui consomme de l'énergie.

La température de désorption T_{d} dépend de la nature du cycle souhaité. Elle est par exemple comprise entre +100°C et +300°C. Ce point présente un grand intérêt car la chaleur à ces températures peut être facilement fournie, soit par chauffage électrique, solaire, ou à combustibles divers (gaz, fuel, bois, etc....), soit par récupération de chaleur perdue, par exemple en sortie d'un moteur thermique, d'une turbine à gaz ou à vapeur, d'une installation nucléaire.

Une machine thermique à adsorption peut mettre en oeuvre plusieurs réacteurs d'adsorption au sein d'un même groupe de sorption, de préférence de caractéristiques identiques, associés chacun à un évaporateur et un condenseur de préférence communs à tout le groupe. L'association des réacteurs d'adsorption au sein d'un groupe de sorption permet de réaliser une machine dont la fonction utile, i.e. production de chaleur ou production de froid, est d'avantage ou totalement continue, par rapport à une machine à réacteur unique, dans laquelle les étapes de pompage et de refoulement alternent et sont donc obligatoirement interrompues. Dans une architecture avec plusieurs adsorbeurs dans un même groupe de sorption, ceux-ci doivent réaliser leur cycle d'adsorption-désorption de manière décalée dans le temps.

En référence à la figure 3, on décrit un principe d'échange de chaleur entre deux réacteurs d'adsorption d'une machine thermique, dont l'un doit recevoir de la chaleur pour sa phase de pressurisation-désorption, et dont l'autre doit évacuer de la chaleur pour sa phase de dépressurisation-adsorption. Cet échange peut se faire naturellement à la condition que le réacteur d'adsorption en phase de chauffe soit à une température inférieure à celui en phase de refroidissement et aussi longtemps que leurs températures ne s'égalent pas.

La figure 3 est un diagramme température-chaleur représentant le cycle, supposé identique pour les deux réacteurs, que ceux-ci effectuent en opposition de phase l'un avec l'autre. Ainsi, un des deux réacteurs d'adsorption ayant fini sa phase d'adsorption, représentée par la courbe 16, se trouve à la température basse Ta, par exemple +40°C, et doit être régénéré. Au même instant, l'autre réacteur d'adsorption ayant fini la phase de désorption, représentée par la courbe 17, se trouve à la température haute T_{d}, par exemple +200°C, et doit être refroidi pour commencer une phase d'adsorption.

Comme représentée par la flèche 18, une certaine quantité de chaleur q_{RCY} peut être fournie par le réacteur d'adsorption initialement à +200°C pour simultanément se refroidir et chauffer le réacteur d'adsorption initialement à +40°C. Le transfert de chaleur peut s'effectuer naturellement jusqu'à une température d'équilibre Tₑ, située par exemple dans une plage de l'ordre de +100 à +140°C.

La condition nécessaire pour réaliser une telle étape de recyclage de chaleur entre deux réacteurs d'adsorption est que l'un soit dans la phase de pressurisation-désorption à une température inférieure à l'autre qui est dans la phase de dépressurisation-adsorption. L'action consistant à échanger de la chaleur entre des réacteurs d'adsorption de la machine thermique est appelée ci-dessous recyclage interne de chaleur.

Le recyclage interne de chaleur présente deux intérêts majeurs. D'une part, comme visible sur la figure 3, la chaleur q_{RO} à fournir pour régénérer un réacteur d'adsorption est obtenue pour une partie q_{RCY} depuis l'intérieur de la machine thermique, de sorte qu'il ne reste qu'une partie q_{RF} à fournir depuis l'extérieur, comme indiqué par la flèche 19. La consommation énergétique de la machine est donc réduite. D'autre part, la quantité de chaleur rejetée par la machine vers l'environnement extérieur est réduite dans les mêmes proportions.

En référence à la figure 4, l'échange de chaleur dans un groupe de plus de deux réacteurs va être présenté.

Dans une architecture de groupe comportant quatre réacteurs d'adsorption ou plus, plusieurs échanges de chaleur entre réacteurs peuvent être réalisés en même temps pour accroître le COP. Dans le cas d'une machine frigorifique ou d'une pompe à chaleur, le rendement énergétique COP est le rapport entre la quantité frigorifique (ou quantité de chauffage) développée Q_{fr} et la quantité d'énergie à fournir pour obtenir cette quantité frigorifique.

Une situation de ce type est illustrée par la figure 4, qui représente, dans un diagramme similaire à la figure 3, un cycle de fonctionnement suivi par six réacteurs. Trois recyclages de chaleur simultanés sont alors possibles :
- Un échange de chaleur 20 a lieu entre un réacteur dans une phase antérieure 21 de l'étape de dépressurisation et d'adsorption et un réacteur dans une phase postérieure 22 de l'étape de pressurisation et désorption, jusqu'à une température d'équilibre haute T₁.
- Un échange de chaleur 23 a lieu entre un réacteur dans une phase intermédiaire 24 de l'étape de dépressurisation et d'adsorption et un réacteur dans une phase intermédiaire 25 de l'étape de pressurisation et désorption, jusqu'à une température d'équilibre intermédiaire T₂.
- Un échange de chaleur 26 a lieu entre un réacteur dans une phase postérieure 27 de l'étape de dépressurisation et d'adsorption et un réacteur dans une phase antérieure 28 de l'étape de pressurisation et désorption, jusqu'à une température d'équilibre basse T₃.

En présence de quatre réacteurs, seulement deux parmi les trois échanges de chaleur 20, 23 et 26 peuvent avoir lieu simultanément.

Dans l'étape de pressurisation et désorption d'un réacteur, seule la phase finale 29 nécessite donc l'apport d'une quantité de chaleur externe 30, par exemple depuis une source chaude quelconque à une température supérieure ou égale à T_{d}. De même, dans l'étape de dépressurisation et d'adsorption d'un réacteur, la phase finale 31 nécessite le rejet d'une quantité de chaleur vers l'extérieur, par exemple vers une source froide quelconque à une température inférieure ou égale à Tₐ.

Il résulte de la décomposition des étapes d'adsorption et de désorption en plusieurs phases successives et de la réalisation des multiples échanges de chaleur correspondants que le COP de la machine ainsi constituée peut être nettement amélioré. Cette amélioration est visible qualitativement à partir des quantités de chaleur q_{RCY} et q_{RF} représentées sur la figure 4.

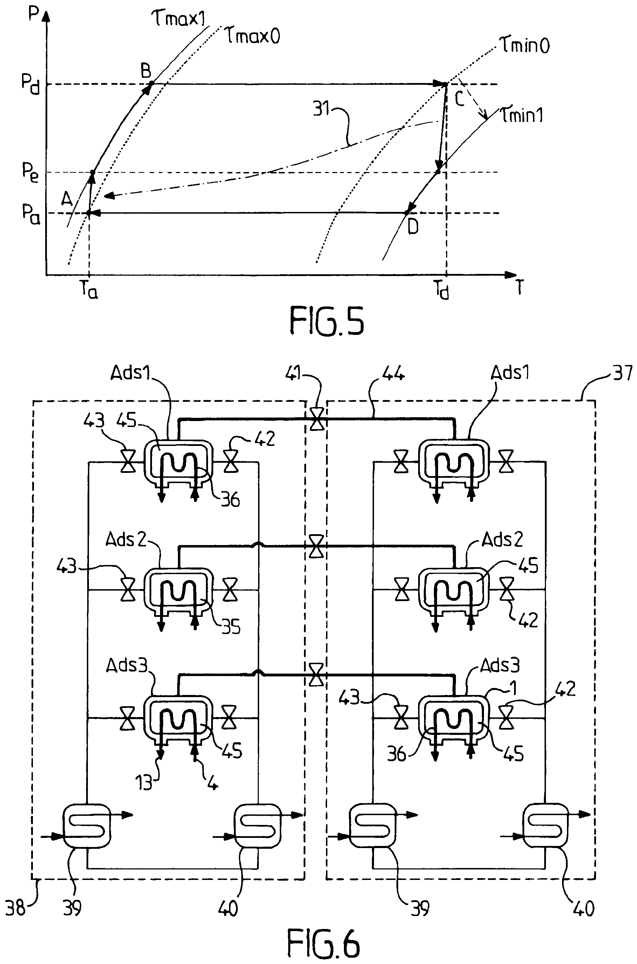

Le principe de l'échange de vapeur va maintenant être décrit en référence à la figure 5. Cette figure représente un diagramme température-pression d'un cycle de fonctionnement durant lequel est effectué un échange de chaleur entre deux réacteurs dont les cycles de fonctionnement sont sensiblement identiques. Les points A et C désignent les points extrêmes du cycle, respectivement ceux de fin d'adsorption et de fin de désorption de chaque réacteur tel qu'ils sont définis en référence à la figure 2.

De même que sur la figure 2, l'étape de dépressurisation et d'adsorption 14 est une étape dans laquelle la température du matériau adsorbant 2 diminue de Td à Ta et la pression partielle de fluide de travail diminue de Pd à Pa. L'étape de dépressurisation et d'adsorption consiste en une phase de dépressurisation de C vers D suivi d'une phase d'adsorption de D vers A. L'étape de pressurisation et désorption 15 est une étape dans laquelle la température du matériau adsorbant 2 progresse de Tₐ à T_{d}>Tₐ et la pression partielle de fluide de travail progresse de Pₐ à P_{d}>Pₐ. L'étape de pressurisation et de désorption consiste en une phase de pressurisation de A vers B suivi d'une phase désorption de B vers C.

L'échange de vapeur consiste à effectuer un transfert de fluide 31 par détente naturelle entre les deux réacteurs dont l'un est en basse pression, de préférence à la fin de sa phase d'adsorption A, et doit commencer sa phase de pressurisation, et dont l'autre est en haute pression, de préférence à la fin de sa phase de désorption C, et doit commencer sa phase de dépressurisation.

Ce transfert de fluide 31 peut être effectué jusqu'à ce que les pressions des deux réacteurs s'égalisent à une pression d'équilibre notée Pe dans la figure 5. La quantité de vapeur cédée par le réacteur en haute pression est intégralement transférée au réacteur en basse pression.

L'échange de vapeur déforme le cycle adsorption-désorption tel qu'il est présenté dans la figure 2. En effet, comme la quantité de vapeur cédée par le réacteur en haute pression est intégralement transmise au réacteur en basse pression, le taux d'adsorption maximum du réacteur en basse pression est augmenté, par l'arrivée de vapeur, de τmax0 (défini par Ta et Pa) à la valeur τmax1. Le taux d'adsorption minimum du réacteur en haute pression τmin0 (défini par Td et Pd) est diminué jusqu'à τmin1. Si les réacteurs sont identiques, le taux d'adsorption maximum du réacteur en basse pression est augmenté d'autant que le taux du réacteur en haute pression est diminué.

L'augmentation du taux à l'adsorption se traduit par une augmentation de fluide adsorbé dans le corps adsorbant, ce qui induit l'augmentation de la quantité de froid produit dans un système frigorifique comportant ce corps adsorbant. En contrepartie, la diminution du taux de désorption minimum se traduit par une augmentation de la quantité de chaleur nécessaire pour effectuer la désorption.

De préférence l'échange de vapeur est effectué entre deux réacteurs, l'un étant en phase de pressurisation et l'autre étant en phase de dépressurisation.

Dans un mode de réalisation l'échange de vapeur est adiabatique. Ainsi au cours de l'échange de vapeurs, aucun des réacteurs échangeant de la vapeur ne reçoit ou ne fournit simultanément de la chaleur à l'extérieur des deux réacteurs. Par conséquent le réacteur recevant de la vapeur s'échauffe librement, tandis que celui cédant de la vapeur se refroidit librement. L'échange de vapeur adiabatique permet d'obtenir une bonne augmentation des performances d'un système thermique à sorption.

Toutefois, dans un autre mode de réalisation, au cours des échanges de vapeurs entre une paire de réacteurs, les réacteurs peuvent échanger de la chaleur avec un autre réacteur ou une source extérieure. Le réacteur recevant de la vapeur et dégageant de la chaleur est refroidi par le circuit caloporteur. Cela permet de le maintenir à la température basse d'adsorption. Parallèlement, le réacteur cédant de la vapeur et absorbant de la chaleur est chauffé par le circuit caloporteur. Cela permet de le maintenir à la température haute de désorption.

Un système thermique à sorption mettant en oeuvre à la fois des échanges de vapeur et des échanges de chaleur est schématisé sur la figure 6. Ce système thermique comprend un premier groupe de sorption 37 et un deuxième groupe de sorption 38 identiques. Ces groupes de sorption comportent chacun trois réacteurs de sorption Ads1, Ads2, Ads3. Chaque groupe comporte un évaporateur 39 et un condenseur 40 et chaque réacteur de sorption comporte une enceinte 1. Cette décomposition en groupes de sorption permet une fabrication et une maintenance facilitée du système de sorption mais aussi une bonne modularité et redondance du système de sorption.

Chaque réacteur du premier groupe 37 est associé à un réacteur respectif du deuxième groupe 38 par des moyens de liaisons et d'obturation. Ici ces moyens de liaison et d'obturation sont des conduites 44 et des vannes d'isolement 41 qui relient les enceintes des deux réacteurs concernés. Celles-ci permettent la mise en communication ou l'isolement des deux enceintes des deux réacteurs. Cette mis en communication permet la détente du fluide de travail entre les deux réacteurs. Les vannes 41 peuvent être de conception simple sans nécessiter une régulation ou un contrôle des débits et pressions. Tout autre moyen de liaison et d'obturation connu de l'homme du métier peut toutefois aussi être utilisé.

Des vannes d'adsorption 43 reliant les réacteurs à l'évaporateur 39, s'ouvrent lorsque la pression du réacteur correspondant est basse et permet de pomper des vapeurs et provoquer l'évaporation. Des vannes de désorption 42 reliant les réacteurs au condenseur 40 s'ouvrent lorsque la pression du réacteur correspondant est haute et permet de refouler des vapeurs et provoquer la condensation.

Des échanges de chaleur peuvent être effectués entre les réacteurs au sein de chaque groupe au moyen de plusieurs boucles de circulation de fluide caloporteur non représentées reliant les échanges de chaleur 36 d'un même groupe.

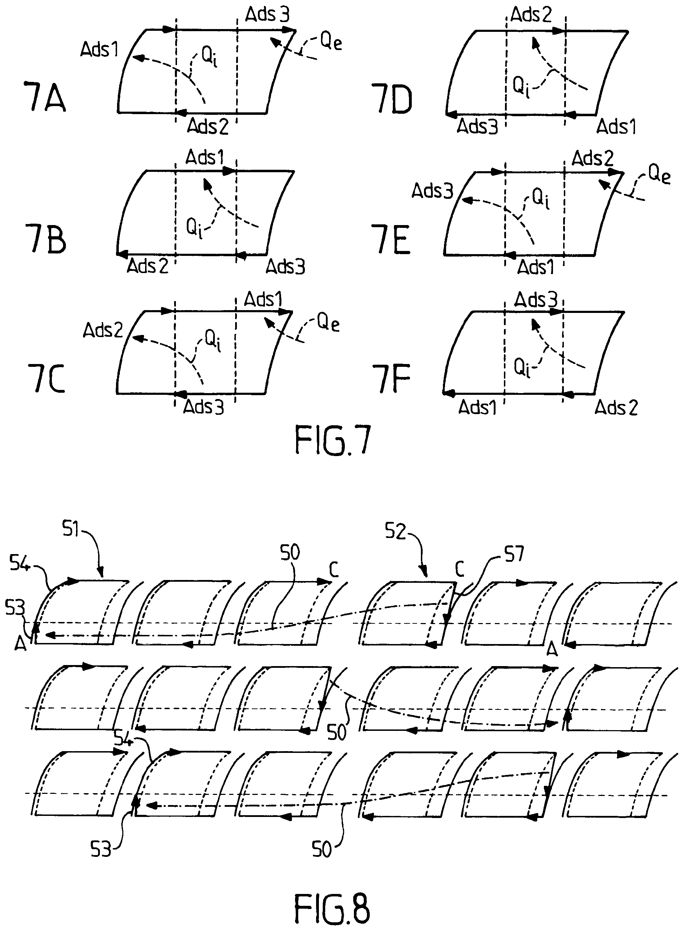

On va maintenant décrire le fonctionnement de la machine de la figure 6 en référence aux figures 7 et 8.

Chaque groupe suit de manière décalée dans le temps une même séquence d'étapes de recyclage de chaleurs. Le recyclage de chaleur reste interne à un groupe. En revanche, les réacteurs des deux groupes peuvent échanger de la vapeur entre eux. La séquence d'un groupe de trois réacteurs est représentée dans les Figures 7A à 7F.

Ainsi Les figures 7A à 7F représentent, dans une représentation similaire à la figure 2, six phases successives du cycle de fonctionnement et les échanges de chaleurs effectués au cours de ces phases pour chacun des réacteurs du groupe de sorption. Les trois réacteurs sont représentés respectivement par les flèches Ads1, Ads2 et Ads3.

Des circuits de fluide caloporteur permettent d'effectuer ces échanges de chaleur en reliant notamment les échangeurs de chaleurs 36 de chaque réacteur d'adsorption. Ces circuits caloporteurs sont entre autre reliés à un réchauffeur permettant de fournir de la chaleur jusqu'à la haute température Td pour la désorption et un refroidisseur permettant de refroidir jusqu'à la basse température Ta pour l'adsorption.

Ces séquences correspondent au fonctionnement nominal en régime établi des cycles d'échange de chaleur. Les flèches Qe désignent des apports de chaleur depuis l'extérieur, par exemple par le groupe de chauffe. Les flèches Qi désignent des échanges de chaleur entre réacteurs.

On va maintenant décrire la séquence suivie par les trois réacteurs Ads1, Ads2 et Ads3. Sur la figure 7A, lorsque le premier adsorbeur Ads 1 est dans une phase antérieure de pressurisation et de désorption, il reçoit de la chaleur Qi de l'adsorbeur Ads2. Cette phase correspond à une partie de la phase de pressurisation et le début de la phase d'adsorption. L'adsorbeur Ads1 reçoit ensuite, dans une phase postérieure de pressurisation et de désorption, de la chaleur Qi du troisième adsorbeur Ads3 (figure 7B). Cette phase est directement subséquente à la phase antérieure de pressurisation et de désorption. Dans une phase finale de pressurisation et de désorption, l'adsorbeur 1 reçoit de la chaleur Qe depuis l'extérieur (figure 7C).

Ensuite, lorsque le premier adsorbeur Ads 1 est dans une phase antérieure de dépressurisation et d'adsorption, il fournit de la chaleur Qi au deuxième adsorbeur Ads2 (Figure 7D). Dans une phase postérieure de dépressurisation et d'adsorption, le premier adsorbeur Ads1 fournit de la chaleur au troisième adsorbeur Ads3 (figure 7E).

Le même cycle s'applique pour les autres adsorbeurs Ads2 et Ads3 qui reçoivent respectivement de la chaleur depuis le premier adsorbeur Ads1 (Figue 7D) et le troisième adsorbeur Ads3 (Figure 7C), et le premier adsorbeur Ads1 (Figure 7E) et le deuxième adsorbeur Ads2 (Figure 7F).

Les échanges de vapeur qui ont lieu simultanément dans le système thermique présentée dans la figure 6 sont présentés dans la figure 8 au travers des diagrammes de cycle de chaque réacteur. Les trois premières colonnes de diagrammes correspondent respectivement aux trois réacteurs Ads1, Ads2, Ads3 du premier groupe 37. Les trois colonnes suivantes correspondent respectivement aux trois réacteurs Ads1, Ads2, Ads3 du deuxième groupe 38. La colonne 51 correspond au premier réacteur Ads1 du premier groupe 37. La colonne 52 correspond au premier réacteur du deuxième groupe 38 associé au premier réacteur du premier groupe. Chaque ligne correspond respectivement à une étape successive du cycle de fonctionnement de réacteurs.

Les trois réacteurs de chaque groupe sont déphasés d'un tiers de cycle. Les réacteurs des deux groupes qui sont reliés par une conduite 44 sont déphasés mutuellement d'un demi-cycle. Les flèches en pointillés 50 représentent les échanges de vapeur.

Comme visible sur les figures, la première ligne de la figure 8 représente une phase de fonctionnement qui correspond à la figure 7A pour le premier groupe 37 et à la figure 7D pour le deuxième group 38. La deuxième ligne de la figure 8 représente une phase de fonctionnement qui correspond à la figure 7B pour le premier groupe 37 et à la figure 7E pour le deuxième group 38. La troisième ligne de la figure 8 représente une phase de fonctionnement qui correspond à la figure 7C pour le premier groupe 37 et à la figure 7F pour le deuxième group 38.

Dans un état initial dans le cycle en régime établi, le premier réacteur Ads1 du premier groupe 37 est au point A. Il a fini sa phase d'adsorption et s'apprête à commencer l'étape de pressurisation-désorption. Le premier réacteur Ads1 du deuxième groupe 38 est au point C. Il a fini sa phase de désorption et s'apprête à commencer sa l'étape de dépressurisation-adsorption. Le deuxième réacteur Ads2 et le troisième réacteur Ads3 du premier groupe 37 sont respectivement situés dans l'étape de dépressurisation-adsorption où il cède de la chaleur, et dans l'étape de pressurisation-désorption où il reçoit de la chaleur. Réciproquement, le deuxième réacteur Ads2 et le troisième réacteur Ads3 du deuxième groupe 38 sont respectivement dans l'étape de pressurisation-désorption, et dans l'étape de dépressurisation-adsorption.

Sur la première ligne de la figure 8, les premiers réacteurs Ads1 du premier et du deuxième groupe 38, initialement aux points A et C, commencent respectivement la phase de pressurisation et la phase de dépressurisation. La vanne 41 qui les relie est ouverte et les deux réacteurs Ads1 réalisent donc un échange de vapeurs. Le premier réacteur Ads1 du premier groupe 37 voit son taux d'adsorption augmenter et s'échauffe, tandis que le premier réacteur Ads1 du deuxième groupe 38 voit son taux d'adsorption diminuer et se refroidit. L'échange se poursuit jusqu'à ce que leurs pressions s'égalisent comme présenté par les flèches 53 et 57. Cet échange de vapeur est court au regard des durées des phases de désorption et la phase d'adsorption. Elle est inférieure à la minute.

A partir de là, toujours sur la première ligne de la figure 8, les premiers réacteurs Ads1 sont isolés, par fermeture de la vanne 41, et poursuivent leur phase respective de pressurisation et dépressurisation. Les échanges de chaleur Qi représentés sur la figure 7A sont alors effectués dans le groupe 37 et les échanges de chaleur Qi de la figure 7D dans le groupe 38. Parallèlement les autres réacteurs poursuivent leur évolution sur leur chemin respectif. Cette étape se poursuit jusqu'à ce que les troisièmes réacteurs Ads3 de chaque groupe finissent leur phase respective de désorption (point C) et d'adsorption (points A).

Les deux autres lignes de la figure 8 représentent des phases similaires à la première, dans la mesure où l'état d'évolution des réacteurs est permuté. Ainsi, dans la deuxième ligne, ce sont les troisièmes réacteurs Ads3 de chaque groupe qui échangent de la vapeur depuis le groupe 37 vers le groupe 38 avant de poursuivre leur phase de pressurisation et dépressurisation. Dans la troisième ligne de la figure 8, l'échange de vapeur 50 a lieu entre les deuxièmes réacteurs Ads2 depuis le groupe 38 vers le groupe 37. Les étapes suivantes de fonctionnement de la machine se déduisent directement des étapes ci-dessus en permutant les rôles des deux groupes 37et 38. En effet, à la fin de l'étape représentée à la troisième ligne de la figure 8, le premier groupe 37 est dans le même état que le deuxième groupe 38 au début de l'étape représentée à la première ligne de la figure 8. Les séquences de chaque groupe de réacteurs sont donc identiques et judicieusement déphasées et synchronisées de sorte qu'à chaque début d'étape une paire de réacteurs pris dans les deux groupes soient respectivement aux points A et C.
Dans le mode de réalisation de la figure 6, les échanges de vapeurs ne concernent que les paires de premiers, deuxièmes et troisièmes réacteurs entre eux. Seulement trois vannes 41 sont donc nécessaires. Toutefois, d'autres liaisons entre les deux groupes pourraient être ajoutées, afin de permettre d'effectuer des échanges de vapeurs avec des combinaisons de réacteurs différentes, par exemple afin d'utiliser les échanges de vapeurs 51 dans un fonctionnement transitoire, dégradé ou de maintenance.

L'utilisation d'au moins deux groupes d'adsorption identiques mais déphasés permet de réaliser des échanges de vapeurs ente des groupes à nombres impairs de réacteurs. En effet, la réalisation d'un échange de vapeur présentant une efficacité optimale suppose la présence de deux réacteurs déphasés d'un demi-cycle, ce qui n'est pas le cas dans un groupe comportant un nombre impair de réacteurs.

Le mode de réalisation correspondant aux figures 6, 7 et 8 fournit un système thermique de sorption qui présente une bonne efficacité. Plus précisément, l'efficacité d'un procédé frigorifique par adsorption d'eau sur zéolithe 4A dont l'évaporation a lieu à -20°C et l'adsorption et condensation à +20°C sans recyclage de chaleur ni échange de vapeur se traduit par un COP d'environ 0,45. L'utilisation de la méthode de recyclage de chaleurs pour un groupe de 3 réacteurs permet d'obtenir un COP maximal de l'ordre de 0,78 sans échange de vapeur. La machine de la figure 6 permet d'obtenir un COP maximal de l'ordre de 0,86, soit un gain supplémentaire de 10% sur la méthode de recyclage des chaleurs seule.

Ce principe de mettre en oeuvre différents groupes identiques de réacteurs effectuant chacun une séquence de recyclage de chaleurs au sein d'un groupe et une séquence d'échange de vapeur entre les groupes peut être étendu à plus de deux groupes. Cela permet d'augmenter le nombre de combinaisons possibles dans les échanges entre réacteurs.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes. Plusieurs moyens ou modules peuvent être représentés par un même élément matériel.

Dans les revendications, tout signe de référence entre parenthèses ne saurait être interprété comme une limitation de la revendication.

## Revendications

1. Procédé thermique de sorption mettant en oeuvre un évaporateur (39), un condenseur (40) et une pluralité de groupes de sorption (37,38),
un groupe de sorption comprenant à chaque fois au moins deux réacteurs de sorption (Ads1, Ads2) aptes à effectuer chacun un cycle de fonctionnement avec l'évaporateur et le condenseur associé à ce groupe de sorption, un réacteur comportant un corps sorbant (45) apte à effectuer une sorption d'un fluide de travail en phase vapeur,
dans lequel le cycle de fonctionnement effectué par chacun des réacteurs de sorption comporte :
une étape de dépressurisation et de sorption pour accroître un taux de remplissage du corps sorbant par le fluide de travail, l'étape de dépressurisation et de sorption (14) comportant un phase de dépressurisation et une phase de sorption, et
une étape de pressurisation et de désorption (15) pour réduire un taux de remplissage du corps sorbant (45) par le fluide de travail, l'étape de pressurisation et de désorption comportant une phase de pressurisation et une phase de désorption, plusieurs desdits réacteurs de sorption au sein de chaque groupe de sorption effectuant le cycle de fonctionnement de manière décalée dans le temps, ledit procédé thermique de sorption étant **caractérisé en ce que** chaque réacteur de sorption au sein de chaque groupe effectue pendant l'étape de pressurisation et de désorption (15) un premier échange de chaleur avec un autre réacteur de sorption dudit groupe pour recevoir un flux de chaleur depuis ledit autre réacteur de sorption dudit groupe et pendant l'étape de dépressurisation et de sorption (14) un deuxième échange de chaleur pour transférer un flux de chaleur vers ledit autre réacteur de sorption,
et **en ce que** un réacteur de sorption (Ads1) du premier groupe (37) effectue au cours du cycle de fonctionnement un échange de vapeur (50) avec un réacteur de sorption (Ads1) du deuxième groupe (38) pour recevoir de la vapeur dudit réacteur de sorption du deuxième groupe lors d'une phase de pressurisation du premier réacteur de sorption du groupe et/ou pour céder de la vapeur audit réacteur de sorption du deuxième groupe lors d'une phase de dépressurisation du réacteur de sorption du premier groupe,
ledit réacteur de sorption (Ads1) du premier groupe (37) étant dans la phase de pressurisation lorsque le réacteur d'adsorption (Ads1) du deuxième groupe (38) est dans la phase de dépressurisation et ledit réacteur de sorption du deuxième groupe étant dans la phase de pressurisation lorsque le réacteur de sorption du premier groupe est dans la phase de dépressurisation.

2. Procédé thermique de sorption selon la revendication 1, dans lequel l'échange vapeur (50) est effectué au début desdites phase de pressurisation et de dépressurisation du réacteur de sorption du premier groupe de sorption (37) et du réacteur de sorption du deuxième groupe de sorption (38).

3. Procédé thermique de sorption selon l'une des revendications 1 à 2, dans lequel l'échange de chaleur effectué par un réacteur de sorption est subséquent à l'échange de vapeurs (50) effectué par ledit réacteur de sorption au sein d'un cycle de fonctionnement.

4. Procédé thermique de sorption selon l'une des revendications 1 à 3, dans lequel le premier groupe (37) de sorption comporte un nombre impair de réacteurs de sorption.

5. Procédé thermique de sorption selon l'une des revendications 1 à 4, dans lequel le premier groupe de sorption (37) et le deuxième groupe de sorption (38) ont un même nombre de réacteurs de sorption.

6. Procédé thermique de sorption selon la revendication 5, dans lequel les réacteurs de sorption des groupes de sorption (37,38) ont des cycles de fonctionnement sensiblement identiques et chaque réacteur (Ads1,Ads2,Ads3) du premier groupe (37) effectue au cours du cycle de fonctionnement un échange de vapeur avec un réacteur respectif (Ads1,Ads2,Ads3) du deuxième groupe (38), le réacteur respectif étant déphasé d'un demi cycle par rapport audit réacteur du premier groupe.

7. Procédé thermique de sorption selon l'une des revendications 1 à 6, dans lequel l'échange de vapeur (50) est effectué de manière adiabatique.

8. Procédé thermique de sorption selon l'une des revendications 1 à 7, dans lequel le premier groupe de sorption (37) et le deuxième groupe de sorption (38) comportent un nombre de réacteurs de sorption supérieur ou égal à trois, un premier des réacteurs (Ads1) dans chaque groupe effectuant au moins quatre échanges de chaleur au cours du cycle de fonctionnement pour recevoir des flux de chaleur depuis au moins deux autres des réacteurs (Ads2,Ads3) du même groupe pendant l'étape de pressurisation et désorption du premier réacteur et transférer des flux de chaleur vers au moins deux autres des réacteurs du même groupe pendant l'étape de dépressurisation et de sorption du premier réacteur, un premier échange de chaleur étant effectué entre le premier réacteur (Ads1) dans une phase antérieure de l'étape de dépressurisation et de sorption et un deuxième des réacteurs (Ads2) dans une phase postérieure de l'étape de pressurisation et de désorption,
un deuxième échange de chaleur étant effectué entre le premier réacteur (Ads1) dans une phase postérieure de l'étape de dépressurisation et de sorption et un troisième des réacteurs (Ads3) dans une phase antérieure de l'étape de pressurisation et de désorption,
un troisième échange de chaleur étant effectué entre le premier réacteur (Ads1) dans une phase antérieure de l'étape de pressurisation et de désorption et le deuxième réacteur (Ads2) dans une phase postérieure de l'étape de dépressurisation et de sorption, et
un quatrième échange de chaleur étant effectué entre le premier réacteur (Ads1) dans une phase postérieure de l'étape de pressurisation et de désorption et le troisième réacteur (Ads3) dans une phase antérieure de l'étape de dépressurisation et de sorption.

9. Système thermique à sorption comportant au moins deux groupes de sorption,
un groupe de sorption comportant à chaque fois :
un premier réacteur (Ads1) et un deuxième réacteur de sorption (Ads2) aptes à fonctionner au sein du groupe selon un cycle de fonctionnement et de manière mutuellement décalée dans le temps, chaque réacteur comportant :
un enceinte (1) contenant un corps sorbant (45) apte à effectuer une sorption d'un fluide de travail en phase vapeur,
au moins une conduite de fluide en communication avec l'enceinte pour apporter le fluide de travail au réacteur dans une étape de dépressurisation et de sorption du cycle de fonctionnement et pour évacuer le fluide de travail du réacteur dans une étape de pressurisation et désorption du cycle de fonctionnement, et
un échangeur de chaleur (3) apte à mettre un fluide caloporteur en contact thermique avec le corps sorbant dans l'enceinte,
ledit premier réacteur de sorption (Ads1) d'un premier groupe (37) étant dans la phase de pressurisation lorsque le premier réacteur de sorption d'un deuxième groupe est dans la phase de dépressurisation et ledit premier réacteur de sorption (Ads1) du deuxième groupe (38) étant dans la phase de pressurisation lorsque le premier réacteur de sorption du premier groupe est dans la phase de dépressurisation,
ledit système thermique étant **caractérisé en ce que** chaque réacteur comporte un dispositif de circulation de fluide caloporteur relié aux échangeurs de chaleur des réacteurs d'adsorption du groupe et apte à produire sélectivement des communications de fluide caloporteur entre les échangeurs de chaleur (3) pour transférer des flux de chaleur entre les réacteurs de sorption, de sorte que le premier réacteur de sorption (Ads1) au sein du groupe effectue au cours du cycle de fonctionnement un échange de chaleur avec le deuxième réacteur de sorption (Ads2) du groupe pour recevoir des flux de chaleur depuis le deuxième réacteur de sorption du groupe pendant l'étape de pressurisation et désorption et transférer des flux de chaleur vers le deuxième réacteur de sorption (Ads2) pendant l'étape de dépressurisation et d'adsorption,
et **en ce que** des moyens de liaison obturables (44,41) sont agencés entre l'enceinte (1) du premier réacteur de sorption (Ads1) du premier groupe de sorption (37) et l'enceinte du premier réacteur de sorption du deuxième groupe de sorption (38), et aptes à réaliser un échange de vapeur (50) entre le premier réacteur de sorption du premier groupe et le premier réacteur de sorption du deuxième groupe au cours du cycle de fonctionnement, lesdits moyens de liaison obturables (44,41) étant ouverts lors de la phase de pressurisation du premier réacteur de sorption du premier groupe pour recevoir de la vapeur du réacteur de sorption dudit deuxième groupe, et/ou lors de la phase de dépressurisation du premier réacteur de sorption du premier groupe pour céder de la vapeur audit premier réacteur de sorption du deuxième groupe.

10. Système thermique à sorption selon la revendication 9, dans lequel chaque groupe de sorption comporte au moins trois réacteurs de sorption et dans lequel le dispositif de circulation de fluide caloporteur est apte à produire sélectivement des communications de fluide caloporteur entre les échangeurs de chaleur de sorte que le premier des réacteurs de sorption (Ads1) du groupe effectue au moins quatre échanges de chaleur au cours du cycle de fonctionnement pour recevoir des flux de chaleur depuis au moins deux autres des réacteurs (Ads2,Ads3) du groupe pendant l'étape de pressurisation et désorption et transférer des flux de chaleur vers au moins deux autres des réacteurs du groupe pendant l'étape de dépressurisation et d'adsorption,
un premier échange de chaleur étant effectué entre le premier réacteur (Ads1) dans une phase antérieure de l'étape de dépressurisation et d'adsorption et un deuxième des réacteurs (Ads2) dans une phase postérieure de l'étape de pressurisation et désorption,
un deuxième échange de chaleur étant effectué entre le premier réacteur (Ads1) dans une phase postérieure de l'étape de dépressurisation et d'adsorption et un troisième des réacteurs (Ads3) dans une phase antérieure de l'étape de pressurisation et désorption,
un troisième échange de chaleur étant effectué entre le premier réacteur (Ads1) dans une phase antérieure de l'étape de pressurisation et désorption et le deuxième réacteur (Ads2) dans une phase postérieure de l'étape de dépressurisation et d'adsorption, et
un quatrième échange de chaleur étant effectué entre le premier réacteur (Ads1) dans une phase postérieure de l'étape de pressurisation et désorption et le troisième réacteur (Ads3) dans une phase antérieure de l'étape de dépressurisation et d'adsorption.

11. Système thermique à sorption selon la revendication 10, dans lequel chaque groupe de sorption (37,38) comporte trois réacteurs de sorption (Adsl,Ads2,Ads3) et dans lequel les moyens de liaison obturables (44,41) relient chaque réacteur de sorption du premier groupe à un réacteur respectif du deuxième groupe de sorte que chaque réacteur de sorption du premier groupe (37) de sorption effectue au cour de son cycle de fonctionnement un échange de vapeur avec ledit réacteur respectif du deuxième groupe (38).

## Patentansprüche

1. Thermisches Sorptionsverfahren, wobei ein Verdampfer (39), ein Kondensator (40) und eine Vielzahl von Sorptionsgruppen (37, 38) eingesetzt werden,
wobei eine Sorptionsgruppe stets mindestens zwei Sorptionsreaktoren (Ads1, Ads2) umfasst, jeder dazu geeignet, einen Betriebszyklus mit dem Verdampfer und dem mit der Sorptionsgruppe verbundenen Kondensator auszuführen, wobei ein Reaktor ein Sorptionsmittel (45), welches dazu geeignet ist, eine Sorption einer Arbeitsflüssigkeit in der Verdampfungsphase auszuführen, umfasst,
wobei der von jedem der Sorptionsreaktoren ausgeführte Betriebszyklus umfasst:
einen Druckabfall- und Sorptionsschritt, um den Füllstand des Sorptionsmittels durch die Arbeitsflüssigkeit zu erhöhen; wobei der Druckabfall- und Sorptionsschritt (14) eine Druckabfallphase und eine Sorptionsphase umfasst, und
einen Druckausgleichs- und Desorptionsschritt (15), um den Füllstand der Sorptionsmittels durch die Arbeitsflüssigkeit zu reduzieren, wobei der Druckausgleichs- und Desorptionsschritt eine Druckausgleichphase und eine Desorptionsphase umfasst, wobei eine Vielzahl der Sorptionsreaktoren innerhalb jeder Sorptionsgruppe den Betriebszyklus zeitlich verschoben ausführen,
wobei das thermische Sorptionsverfahren **dadurch gekennzeichnet ist, dass** jeder Sorptionsreaktor innerhalb jeder Sorptionsgruppe während des Druckausgleichs- und Desorptionsschrittes (15) einen ersten Wärmeaustausch mit einem anderen Sorptionsreaktor der Gruppe, um einen Wärmefluss von dem anderen Sorptionsreaktor der Gruppe aufzunehmen, und während des Druckabfalls- und Sorptionsschrittes (14) einen zweiten Wärmeaustausch ausführt, um einen Wärmefluss zu dem anderen Sorptionsreaktor zu leiten,
und dadurch, dass ein Sorptionsreaktor (Ads1) der ersten Gruppe (37) während des Betriebszyklus einen Dampfaustausch (50) mit einem der Sorptionsreaktoren (Ads1) der zweiten Gruppe (38) ausführt, um von dem Sorptionsreaktor der zweiten Gruppe während einer Druckausgleichsphase des ersten Sorptionsreaktors der Gruppe Dampf aufzunehmen und/oder Dampf an den Sorptionsreaktor der zweiten Gruppe während einer Druckabfallphase des Sorptionsreaktor der ersten Gruppe abzugeben,
wobei der Sorptionsreaktor (Ads1) der ersten Gruppe (37) in der Druckausgleichsphase ist, während der Adsorptionsreaktor (Ads1) der zweiten Gruppe (38) in der Druckabfallphase ist, und wobei der Sorptionsreaktor der zweiten Gruppe in der Druckausgleichsphase ist, während der Sorptionsreaktor der ersten Gruppe in der Druckabfallphase ist.

2. Thermisches Sorptionsverfahren gemäß Anspruch 1, wobei der Dampfaustausch (50) am Anfang der Druckausgleichs- und Druckabfallphasen des Sorptionsreaktors der ersten Gruppe (37) und des Sorptionsreaktors der zweiten Gruppe (38) ausgeführt wird.

3. Thermisches Sorptionsverfahren gemäß einem der Ansprüche 1 bis 2, wobei der durch einen Sorptionsreaktor ausgeführte Wärmeaustausch nach dem von dem Sorptionsreaktor während des Betriebszyklus ausgeführten Dampfaustausches (50) erfolgt.

4. Thermisches Sorptionsverfahren gemäß einem der Ansprüche 1 bis 3, wobei die erste Sorptionsgruppe (37) eine ungerade Anzahl von Sorptionsreaktoren umfasst.

5. Thermisches Sorptionsverfahren gemäß einem der Ansprüche 1 bis 4, wobei die erste Sorptionsgruppe (37) und die zweite Sorptionsgruppe (38) eine gleiche Anzahl von Sorptionsreaktoren aufweisen.

6. Thermisches Sorptionsverfahren gemäß Anspruch 5, wobei die Sorptionsreaktoren der Sorptionsgruppen (37, 38) im Wesentlichen identische Betriebszyklen aufweisen und jeder Reaktor (Ads1, Ads2, Ads3) der ersten Gruppe (37) während des Betriebszyklus einen Dampfaustausch mit dem jeweiligen Reaktor (Ads1, Ads2, Ads3) der zweiten Gruppe ausführt, wobei der jeweilige Reaktor um einen halben Zyklus im Verhältnis zum Reaktor der ersten Gruppe versetzt ist.

7. Thermisches Sorptionsverfahren gemäß einem der Ansprüche 1 bis 6, wobei der Dampfaustausch (50) adiabatisch ausgeführt wird.

8. Thermisches Sorptionsverfahren gemäß einem der Ansprüche 1 bis 7, wobei die erste Sorptionsgruppe (37) und die zweite Sorptionsgruppe (38) eine Anzahl von Sorptionsreaktoren größer oder gleich drei umfassen, wobei ein erster der Reaktoren (Ads1) in jeder Gruppe mindestens vier Wärmeaustäusche innerhalb eines Betriebszyklus ausführt, um den Wärmefluss von mindestens zwei anderen Reaktoren (Ads2, Ads3) der gleichen Gruppe während des Druckausgleichs- und Desorptionsschrittes des ersten Reaktors aufzunehmen und Wärmeflüsse an mindestens zwei andere Reaktoren der gleichen Gruppe während des Druckabfall- und Sorptionsschrittes des ersten Reaktor zu leiten, wobei ein erster Wärmeaustausch zwischen dem ersten Reaktor (Ads1) in einer dem Druckabfall- und Sorptionsschritt vorgelagerten Phase und einem zweiten Reaktor (Ads2) in einer dem Druckausgleich- und Desorptionsschritt nachgelagerten Phase ausgeführt wird,
wobei ein zweiter Wärmeaustausch zwischen dem ersten Reaktor (Ads1) in einer dem Druckabfall- und Sorptionsschritt nachgelagerten Phase und einem dritten Reaktor (Ads3) in einer dem Druckausgleich- und Desorptionsschritt vorgelagerten Phase ausgeführt wird, wobei ein dritter Wärmeaustausch zwischen dem ersten Reaktor (Ads1) in einer dem Druckausgleich- und Desorptionsschritt vorgelagerten Phase und einem zweiten Reaktor (Ads2) in einer dem Druckabfall- und Sorptionsschritt nachgelagerten Phase ausgeführt wird, und wobei ein vierter Wärmeaustausch zwischen einem ersten Reaktor (Ads1) in einer dem Druckausgleich- und Desorptionsschritt nachgelagerten Phase und einem dritten Reaktor (Ads3) in einer dem Druckabfall- und Sorptionsschritt vorgelagerten Phase ausgeführt wird.

9. Thermisches Sorptionssystem umfassend mindestens zwei Sorptionsgruppen,
wobei eine Sorptionsgruppe jeweils umfasst:
einen ersten Sorptionsreaktor (Ads1) und einen zweiten Sorptionsreaktor (Ads2), die innerhalb der Gruppe nach einem Betriebszyklus wechselseitig zeitlich verschoben arbeiten, wobei jeder Reaktor umfasst:
ein Gehäuse (1), welches das Sorptionsmittel (45) enthält, um eine Arbeitsflüssigkeit in der Verdampfungsphase zu sorbieren,
mindestens eine Flüssigkeitsleitung, welche mit dem Gehäuse zusammenwirkt, um die Arbeitsflüssigkeit zum Reaktor in einem Druckabfall- und Sorptionsschritt des Betriebszyklus zu leiten und um die Arbeitsflüssigkeit des Reaktors in einem Druckausgleich- und Desorptionsschritt des Betriebszyklus abzuleiten, und
einen Wärmetauscher (3), welcher dazu geeignet ist, eine Wärmeträgerflüssigkeit in Wärmekontakt mit dem Sorptionsmittel im Gehäuse zu bringen,
wobei der erste Sorptionsreaktor (Ads1) einer ersten Gruppe (37) in der Druckausgleichsphase ist, während der erste Sorptionsreaktor einer zweiten Gruppe in der Druckabfallphase ist, und der erste Sorptionsreaktor (Ads1) der zweiten Gruppe (38) in der Druckausgleichsphase ist, während der erste Sorptionsreaktor der ersten Gruppe in der Druckabfallphase ist, wobei das thermische System **dadurch gekennzeichnet ist, dass** jeder Reaktor eine Kreislaufvorrichtung der Wärmeträgerflüssigkeit umfasst, welche mit dem Wärmetauscher der Adsorptionsreaktoren der Gruppe verbunden und dazu geeignet ist, eine selektives Zusammenwirken der Wärmeträgerflüssigkeit zwischen den Wärmetauschern (3) herbeizuführen, um Wärmeflüsse zwischen den Sorptionsreaktoren zu leiten, so dass der erste Sorptionsreaktor (Ads1) innerhalb der Gruppe einen Wärmeaustausch mit dem zweiten Sorptionsreaktor (Ads2) der Gruppe während des Betriebszyklus ausführt, um Wärmeflüsse vom zweiten Sorptionsreaktor der Gruppe während des Druckausgleichs- und Desorptionsschrittes aufzunehmen und Wärmeflüsse zum zweiten Sorptionsreaktor (Ads2) während des Druckabfalls- und Adsorptionsschrittes zu leiten,
und dadurch, dass verschließbare Verbindungsmittel (44, 41) zwischen dem Gehäuse (1) des ersten Sorptionsreaktors (Ads1) der ersten Sorptionsgruppe (37) und dem Gehäuse des ersten Sorptionsreaktors der zweiten Sorptionsgruppe (38) angeordnet sind, welche dazu geeignet sind, einen Dampfaustausch (50) zwischen dem ersten Sorptionsreaktor der ersten Gruppe und dem ersten Sorptionsreaktor der zweiten Gruppe während des Betriebszyklus auszuführen, wobei die verschließbaren Verbindungsmittel (44, 41) während der Druckausgleichsphase des ersten Sorptionsreaktors der ersten Gruppe, um Dampf vom Sorptionsreaktor der zweiten Gruppe aufzunehmen, und/oder während der Druckabfallphase des ersten Sorptionsreaktors offen sind, um Dampf an den ersten Sorptionsreaktor der zweiten Gruppe abzugeben.

10. Thermisches Sorptionssystem gemäß Anspruch 9, wobei jede Sorptionsgruppe mindestens drei Sorptionsreaktoren umfasst und wobei die Kreislaufvorrichtung der Wärmeträgerflüssigkeit dazu geeignet ist, selektives Zusammenwirken der Wärmeträgerflüssigkeiten zwischen den Wärmetauschern zu erzeugen, so dass der erste Sorptionsreaktor (Ads1) der Gruppe mindestens vier Wärmeaustäusche während des Betriebszyklus ausführt, um Wärmeflüsse von mindestens zwei anderen Sorptionsreaktoren (Ads2, Ads3) der Gruppe während des Druckausgleichs- und Desorptionsschrittes aufzunehmen und Wärmeflüsse zu mindestens zwei anderen Reaktoren der Gruppe während des Druckabfalls- und Adsorptionsschrittes zu leiten,
wobei ein erster Wärmetausch zwischen dem ersten Reaktor (Ads1) in einer dem Druckabfall- und Adsorptionsschritt vorgelagerten Phase und einem zweiten Reaktor (Ads2) in einer dem Druckausgleich- und Desorptionsschritt nachgelagerten Phase ausführbar ist,
wobei ein zweiter Wärmeaustausch zwischen dem ersten Reaktor (Ads1) in einer dem Druckabfall- und Adsorptionsschritt nachgelagerten Phase und einem dritten Reaktor (Ads3) in einer dem Druckausgleich- und Desorptionsschritt vorgelagerten Phase ausführbar ist, wobei ein dritter Wärmeaustausch zwischen dem ersten Reaktor (Ads1) in einer dem Druckausgleich- und Desorptionsschritt vorgelagerten Phase und einem zweiten Reaktor (Ads2) in einer dem Druckabfall- und Adsorptionsschritt nachgelagerten Phase ausführbar ist, und wobei ein vierter Wärmeaustausch zwischen einem ersten Reaktor (Ads1) in einer dem Druckausgleich- und Desorptionsschritt nachgelagerten Phase und einem dritten Reaktor (Ads3) in einer dem Druckabfall- und Adsorptionsschritt vorgelagerten Phase ausführbar ist.

11. Thermisches Sorptionssystem gemäß Anspruch 10, wobei jede Sorptionsgruppe (37, 38) drei Sorptionsreaktoren (Ads1, Ads2, Ads3) umfasst und wobei die verschließbaren Verbindungsmittel (44, 41) jeden Sorptionsreaktor der ersten Gruppe mit einem jeweiligen Sorptionsreaktor der zweiten Gruppe verbinden, so dass jeder Sorptionsreaktor der ersten Sorptionsgruppe (37) während seines Betriebszyklus einen Dampfaustausch mit dem jeweiligen Sorptionsreaktor der zweiten Gruppe (38) ausführt.

## Claims

1. Thermal sorption method employing an evaporator (39), a condenser (40) and a plurality of sorption units (37, 38),
a sorption unit comprising in each case at least two sorption reactors (Ads1 and Ads2) each capable of performing an operating cycle with the evaporator and the condenser associated with this sorption unit, a reactor comprising a sorbent body (45) capable of carrying out sorption of a working fluid in vapour phase,
in which the operating cycle performed by each sorption reactor comprises:
a depressurisation and sorption step to increase a rate of filling of the sorbent body by the working fluid, the depressurisation and sorption step (14) comprising a depressurisation phase and a sorption phase, and
a pressurisation and desorption step (15) to reduce a rate of filling of the sorbent body (45) by the working fluid, the pressurisation and desorption step comprising a pressurisation phase and a desorption phase, several of said sorption reactors within each sorption unit performing the operating cycle with a time lag, said thermal sorption method being **characterised in that** each sorption reactor within each unit carries out during the pressurisation and desorption step (15) a first heat exchange with another sorption reactor of said unit to receive a heat flow from said other sorption reactor of said group and during the depressurisation and sorption step (14) a second heat exchange to transfer a heat flow to said other sorption reactor,
and **in that** a sorption reactor (Ads1) of the first unit (37) carries out during the operating cycle a steam exchange (50) with a sorption reactor (Ads1) of the second unit (38) to receive steam from said sorption reactor of the second unit during a phase of pressurisation of the first sorption reactor of the unit and/or to yield steam to said sorption reactor of the second unit during a phase of depressurisation of the sorption reactor of the first unit,
said sorption reactor (Ads1) of the first unit (37) being in the pressurisation phase when the adsorption reactor (Ads1) of the second unit (38) is in the depressurisation phase and said sorption reactor of the second unit being in the pressurisation phase when the sorption reactor of the first unit is in the depressurisation phase.

2. Thermal sorption method according to claim 1, in which the steam exchange (50) is carried out at the beginning of said phases of pressurisation and depressurisation of the sorption reactor of the first sorption unit (37) and of the sorption reactor of the second sorption unit (38).

3. Thermal sorption method according to one of claims 1 to 2, in which the heat exchange carried out by a sorption reactor is subsequent to the steam exchange (50) carried out by said sorption reactor within an operating cycle.

4. Thermal sorption method according to one of claims 1 to 3, in which first sorption unit (37) comprises an odd number of sorption reactors.

5. Thermal sorption method according to one of claims 1 to 4, in which the first sorption unit (37) and the second sorption unit (38) have the same number of sorption reactors.

6. Thermal sorption method according to claim 5, in which the sorption reactors of the sorption units (37, 38) have substantially identical operating cycles and each reactor (Ads1, Ads2 and Ads3) of the first unit (37) carries out during the operating cycle a heat exchange with a respective reactor (Ads1, Ads2 and Ads3) of the second unit (38), the respective reactor being phase-shifted by a half-cycle with respect to said reactor of the first unit.

7. Thermal sorption method according to one of claims 1 to 6, in which the steam exchange (50) is carried out adiabatically.

8. Thermal sorption method according to one of claims 1 to 7, in which the first sorption unit (37) and the second sorption unit (38) comprise a number of sorption reactors greater than or equal to three, a first reactor (Ads1) in each unit carrying out at least four heat exchanges during the operating cycle to receive heat flows from at least two other reactors (Ads2, Ads3) of the same unit during the step of pressurisation and desorption of the first reactor and transfer heat flows to at least two other reactors of the same unit during the step of depressurisation and sorption of the first reactor, a first heat exchange being carried out between the first reactor (Ads1) in an earlier phase of the depressurisation and sorption step and a second reactor (Ads2) in a later phase of the pressurisation and desorption step,
a second heat exchange being carried out between the first reactor (Ads1) in a later phase of the depressurisation and sorption step and a third reactor (Ads3) in an earlier phase of the pressurisation and desorption step,
a third heat exchange being carried out being the first reactor (Ads1) in an earlier phase of the pressurisation and desorption step and the second reactor (Ads2) in a later phase of the depressurisation and sorption step, and
a fourth heat exchange being carried out between the first reactor (Ads1) in a later phase of the pressurisation and desorption step and the third reactor (Ads3) in an earlier phase of the depressurisation and sorption step.

9. Thermal sorption system comprising at least two sorption units,
a sorption unit comprising in each case:
a first reactor (Ads1) and a second sorption reactor (Ads2) capable of operating within the unit according to an operating cycle and with a mutual time lag, each reactor comprising:
an enclosure (1) containing a sorbent body (45) capable of carrying out sorption of a working fluid in the vapour phase,
at least one fluid line communicating with the enclosure to bring the working fluid to the reactor in a depressurisation and sorption step of the operating cycle and to evacuate the working fluid from the reactor in a pressurisation and desorption step of the operating cycle, and
a heat exchanger (3) capable of placing a coolant in thermal contact with the sorbent body in the enclosure,
said first sorption reactor (Ads1) of a first unit (37) being in the depressurisation phase when the first sorption reactor of a second unit is in the depressurisation phase and said first sorption reactor (Ads1) of the second unit (38) being in the pressurisation phase when the first sorption reactor of the first unit is in the depressurisation phase,
said thermal system being **characterised in that** each reactor comprises a coolant circulation system connected to the heat exchangers of the absorption reaction of the unit and capable of selectively producing coolant communications between the heat exchangers (3) to transfer heat flows between the sorption reactors, so that the first sorption reactor (Ads1) within the unit carries out during the operating cycle a heat exchange with the second sorption reactor (Ads2) of the unit to receive heat flows from the second sorption reactor of the unit during the pressurisation and desorption step and transfer heat flows to the second sorption reactor (Ads2) during the depressurisation and adsorption step,
and **in that** closable connecting means (44, 41) are arranged between the enclosure (1) of the first sorption reactor (Ads1) of the first sorption unit (37) and the enclosure of the first sorption reactor of the second sorption unit (38), and capable of carrying out a steam exchange (50) between the first sorption reactor of the first unit and the first sorption reactor of the second unit during the operating cycle, said closable connecting means (44, 41) being opened during the phase of pressurisation of the first sorption reactor of the first unit to receive steam from the sorption reactor of said second unit, and/or during the phase of depressurisation of the first sorption reactor of the first unit to yield steam to the first sorption reactor of the second unit.

10. Thermal sorption method according to claim 9, in which each sorption unit comprises at least three sorption reactors and in which the coolant circulation system is capable of selectively producing coolant communications between the heat exchangers so that the first of the sorption reactors (Ads1) of the unit carries out at least four heat exchanges during the operation cycle to receive heat flows from at least two other reactors (Ads2 and Ads3) of the unit during the pressurisation and desorption step and transfer heat flows to at least two other reactors of the unit during the depressurisation and adsorption step,
a first heat exchange being carried out between the first reactor (Ads1) in an earlier phase of the depressurisation and adsorption step and a second reactor (Ads2) in a later phase of the pressurisation and desorption step,
a second heat exchange being carried out between the first reactor (Ads1) in a later phase of the depressurisation and adsorption step and a third reactor (Ads3) in an earlier phase of the pressurisation and desorption step,
a third heat exchange being carried out between the first reactor (Ads1) in an earlier phase of the pressurisation and desorption step and the second reactor (Ads2) in a later phase of the depressurisation and adsorption step, and
a fourth heat exchange being carried out between the first reactor (Ads1) in a later phase of the pressurisation and desorption step and the third reactor (Ads3) in an earlier phase of the depressurisation and adsorption step.

11. Thermal sorption method according to claim 10, in which each sorption unit (37, 38) comprises three sorption reactors (Ads1, Ads2 and Ads3) and in which the closable connecting means (44, 41) connect each sorption reactor of the first unit to a respective reactor of the second unit so that each sorption reactor of the first sorption unit (37) carries out during its operating cycle a steam exchange with said respective reactor of the second unit (38).
